# EUROPÄISCHE PATENTSCHRIFT

(11) **EP 2 257 784 B1**
(45) Veröffentlichungstag und Bekanntmachung des Hinweises auf die Patenterteilung: **12.09.2012**
(21) Anmeldenummer: 09722040.4
(22) Anmeldetag: 23.03.2009
(51) Int. Cl.: G01N 21/03, B01L 3/00, B01L 9/00

(54) **Küvette zur optischen Untersuchung kleiner Flüssigkeitsmengen**
Cuvette for optically examining small amounts of liquid
Cuvette d'examen optique de petites quantités de liquide

(30) Priorität: 21.03.2008 US 38596 P
(43) Veröffentlichungstag der Anmeldung: 08.12.2010
(73) Patentinhaber: EPPENDORF AG, 22339 Hamburg (DE)
(72) Erfinder: EIKELMANN, Sven, 22299 Hamburg (DE); JOLIE, Christoph, 22765 Hamburg (DE); GOEMANN-THOSS, Wolfgang, 22359 Hamburg (DE)
(74) Vertreter: Hauck Patent- und Rechtsanwälte
(86) Internationale Anmeldenummer: PCT/EP2009/002114
(87) Internationale Veröffentlichungsnummer: WO 2009/115344

(56) Entgegenhaltungen:
- WO-A1-00/75632
- WO-A1-99/36764
- WO-A1-2007/111555
- WO-A2-2006/086459
- WO-A2-2007/111838
- DE-A1- 2 726 498
- DE-A1- 19 826 470
- US-A- 4 332 471
- US-A- 4 682 890
- US-A- 5 331 398
- US-A- 5 601 991
- US-A- 5 795 748
- US-A1- 2002 116 987
- US-A1- 2002 140 931
- US-A1- 2006 077 390
- US-A1- 2007 019 189

## Beschreibung

### Gebiet der Erfindung

Die Erfindung betrifft die Analyse von flüssigen Proben mit einem Spektrometer oder Photometer oder anderen optischen Mcssvorrichtungen. Derartige Analysen erfolgen typischerweise, aber nicht ausschließlich, im molekularbiologischen, biochemischen, anorganisch-chemischen, organisch-chemischen und lebensmittelchemischen Labor. Proben werden z.B. in der Forschung, in der Diagnostik und in der Qualitätskontrolle optisch analysiert. Sie werden z.B. mittels Absorptions-, Reflektions-, Emissions-, Fluoreszenz- Raman- oder Lumineszenzspektroskopie im UV-VIS oder IR-Wellenlängenbereich analysiert. Beispiele für zu messende Analyte sind Biomoleküle wie Nukleinsäuren, Proteine, Lipide sowie anorganische oder organische Stoffe und Verbindungen. Diese Analyte können direkt oder nach chemischer Reaktion, die der Erleichterung der spektrometrischen oder photometrischen Analyse dient, gemessen werden.

Die Erfindung betrifft insbesondere alle beispielhaft genannten Anwendungen. Ein wesentlicher Einsatzbereich ist die Messung kostbarer Proben in geringen Mengen in der Molekularbiologic. Vielfach stehen nur geringe Probenmengen (z.B. unter einem bis 5 Mikroliter) zur Verfügung, weil nicht mehr Material gewonnen werden kann. Bei Verdünnung der Proben würden aufgrund verringerter Absorptionen die Messergebnisse zu ungenau. Eine typische Anwendung ist die photometrische oder fluorimetrische Messung von Nukleinsäure-Konzentrationen vor einer PCR oder Real-Time-PCR, um die für die PCR optimale Ausgangsmenge der Nukleinsäurc einsetzen zu können. Ein weiteres Beispiel ist die Messung der Konzentration von Nukleinsäuren und in die Nukleinsäure eingebauten Markersubstanzen sowie daraus abgeleitet die Markierungsdichte bei markierten Nukleinsäuren, um vor dem Beginn eines Microarray-Experiments die optimale Menge an markierter Nukleinsäure einsetzen zu können und sicher zu sein, dass die Markierungsdichte der Nukleinsäure im optimalen Bereich liegt.

### Stand der Technik

Für die spektrometrische oder photometrische Analyse werden flüssige Proben in Küvetten gefüllt. Standardküvetten sind für den Einsatz in die Küvettenschächte der meisten gängigen Spektrometer und Photometer geeignet. Diese Küvettenschächte werden nachfolgend auch als "Standardküvettenschächte" bezeichnet. Weit verbreitet haben sich Standardküvettenschächte handelsüblicher optischer Messgeräte mit einem Querschnitt von 12,5 mm x 12,5 mm. Die Höhen des Lichtstrahles über dem Boden des Küvettenschachtes variieren gerätcabhängig von 8,5 mm bis 20 mm. Standardküvetten haben einen kastenförmigen Umriss, wobei der Querschnitt und die Höhe an die Maße der Standardküvettenschächte angepaßt sind.

Wiederverwendbare Standardküvetten aus Quarzglas für kleine Probenmengen werden insbesondere von den Firmen Hellma und Strana vertrieben. Diese Ultra-Mikro-Küvetten haben eine Schichtdicke von 1 mm oder mehr. Sie sind sehr schwierig blasenfrei zu befüllen und äußerst aufwendig zu leeren und zu reinigen. Da die Hauptanwendungen der optischen Messungen sehr kleiner Volumina in der Messung von Nukleinsäuren im UV-Bereich liegen, bestehen sie aus Quarzglas und sind besonders teuer. Da sie sehr teuer in der Anschaffung sind, müssen sie sorgsam behandelt werden. Für im Markt angebotene Ultra-Mikro-Küvetten aus Quarzglas muss ein Mindestvolumen von 5 Mikroliter eingesetzt werden, was für manche Anwendungen zuviel ist.

Andere Küvetten werden unter dem Begriff "Mikrolitermesszelle" vertrieben. Die Firma Hellma vermarktet unter der Produktbezeichnung "Tray Cell®" und die Firma Implen unter der Produktbezeichnung "Label Guard" eine Mikrolitermesszelle, die in ihren Abmessungen einer Standardküvette entspricht und deshalb in vielen gängigen Spektralphotometern verwendet werden kann. Die Mikrolitermesszelle der Firma Hellma ist in der WO 2005/114146 A1 beschrieben. Für die Durchführung der Analyse muss ein Tropfen der zu analysierenden Flüssigkeit von etwa 1 bis 2 Mikroliter bei einer Schichtdicke von 0,2 mm bzw. 3 bis 5 Mikrolitcr bei einer Schichtdicke von 1 mm auf die Oberseite eines Messfensters aufgebracht werden. Die Messkammer wird durch einen Deckel verschlossen. Der Lichtstrahl der Messoptik wird über Strahlumlenkungen und faseroptische Lichtleiter sowie einen Spiegel im Deckel von der Strahlungsquelle durch die Probe zum Sensor geführt.

Die Mikrolitermesszelle ist konstruktiv sehr aufwendig und hat einen hohen Preis und ist deshalb nicht immer wirtschaftlich einsetzbar. Außerdem hat sie eine hohe gerätcabhängige Eigenabsorption von ca. 1,3 E bei 230 bis 650 nm, um die der Messbereich des Messgerätes verringert wird. Ferner besteht nach der Probenbefüllung und dem Deckclaufsetzen keine visuelle Überprüf-barkeit der Messlösung in der Messkammer, um z.B. störende Blasen, Partikel und Fehlpipettierungen erkennen zu können, die zu Fehlmessungen führen können. Nachteilig ist zudem, dass der Anwender nach einer Benutzung das Messfenster aufwendig reinigen muss.

Die Firma NanoDrop Technologie vermarktet unter der Produktbezeichnung "NanoDrop®" ein Photometer, das eine Analyse von Proben mit einem Volumen von nur einem Mikroliter ermöglicht. Das Spektrophotometer ist in der WO 2006/086459 A2 beschrieben. Das System sieht die direkte optische Messung in einem Flüssigkeitstropfen vor, der sich zwischen zwei horizontal ausgerichteten, planaren Flächen befindet. Eine Lichtquelle beleuchtet die Flüssigkeitsprobe von der Seite durch den Spalt zwischen den beiden Flächen. In der unteren Fläche mündet ein Faserlichtleiter, der das Licht nach Durchtritt durch die Probenflüssigkeit zu einem faseroptischen Spektrophotometer weiterleitet. Die Probenflüssigkeit ist also in direktem Kontakt mit der Glasfaser.

Nachteilig an dem Spektrophotometer ist, dass die optische Oberfläche durch bestimmte Proben beeinträchtigt werden kann. Nach der Betriebsanweisung des Spcktrophotometers vom Typ NanoDrop-1000 sind dieses z.B. proteinhaltige Lösungen. In diesem Fall muss der Anwender nach mehrfacher Benutzung die optische Oberfläche manuell durch intensives, langwieriges, starkes Abreiben neu konditionieren. Auch können stark saure oder alkalische Lösungen nicht eingesetzt werden.

Ferner ist die Probe in direktem, offenem Kontakt mit der Umgebung. Gefährliche Substanzen können daher nicht mit diesem System untersucht werden. Gefahrstoffe, wie potentiell infektiöse Substanzen, werden aber im molekularbiologischen, zellbiologischen, biochemischen und chemischen Labor häufig eingesetzt. Für diese Proben ist das System ungeeignet. Aufgrund des offenen Kontakts der Probe mit der Umgebung können Proben kontaminiert werden. Dies kann die Messung verfälschen. Außerdem ist eine Rückgewinnung kostbarer Proben nach der Messung nicht ohne Risiko einer Kontamination möglich.

Das Spektrophotometer ist ein sehr teures Messsystem. Es umfasst eine Messeinheit und einen PC und hat einen großen Platzbedarf. Die Probe kann schnell verdunsten und leicht kontaminiert werden, weil die Mantelfläche des offenen Flüssigkeitstropfens direkten Kontakt zur Umgebung hat.

Die DE 27 26 498 beschreibt eine Küvette, in einen Adapter eingesetzt, die in eine Temperiervorrichtung einsetzbar ist. Die Küvette ist durch eine obere Öffnung befüllbar und ist unten geschlossen.

Die WO 99/36764A beschreibt ein Photometer mit einer Mikroküvette, in die Probenflüssigkeit mittels Kapillarkräften eingesogen werden.

### Kurze Zusammenfassung der Erfindung

Davon ausgehend liegt der Erfindung die Aufgabe zugrunde, eine Vorrichtung zur Verfügung zu stellen, die für optische Untersuchung geringer Probenmenge mit hoher Genauigkeit mittels herkömmlichen optischen Messvorrichtungen geeignet ist.

Ferner soll ein Verfahren zur Verfügung gestellt werden, das die optische Untersuchung besonders kleiner Probenmengen ermöglicht.

Die Aufgabe wird durch eine Küvette mit den Merkmalen des Anspruchs 1 gelöst. Vorteilhafte Ausgestaltungen der Küvette sind in Unteransprüchen angegeben.

Die erfindungsgemäße Küvette umfasst mindestens einen Einsatz mit zwei Messflächen und einen Adapter zum Einsetzen in einem Küvettenschacht einer optischen Mcssvorrichtung und Mittel von Einsatz und Adapter zum lösbaren Halten des mindestens einen Einsatzes am Adapter mit den Messflächen in einem Abstand voneinander zum Positionieren einer Probe zwischen den Messflächen in einem den Küvettenschacht durchquerenden Strahlengang der optischen Messvorrichtung.

Die beiden Messflächen sind an einem Ende einer Pipettenspitze (auch "Messspitze" genannt) angeordnet, das von einem weiteren Ende der Pipettenspitze entfernt ist. Die Messflächen sind bevorzugt integral mit der Pipettenspitze verbunden. Gemäß einer Ausgestaltung kann die Pipettenspitze in einem Adapter mit den Messflächen in vertikaler Ausrichtung im Küvettenschacht positioniert werden.

Das weitere Ende der Pipettenspitze ist so ausgebildet, dass es mit einer Pipette verbindbar ist, d. h. wie das obere Ende einer herkömmlichen Pipettenspitze (z. B. indem es eine Aufstecköffnung aufweist, die auf einen entsprechenden (z. B. zylindrischen oder konischen) Ansatz einer Pipette aufsteckbar ist). Wegen dieser Ausgestaltung wird die Messspitze als "Pipettenspitze" bezeichnet. Die Pipettenspitze kann analog zu einer konventionellen Pipettenspitze auf eine Pipette aufgesteckt und zur Aufnahme des zu messenden Mediums verwendet werden. Die einzusetzende Pipette kann eine konventionelle Pipette sein, kann jedoch auch speziell auf diese Anwendung ausgelegt sein. Gemäß einer anderen Ausgestaltung ist die Pipettenspitze so ausgebildet, dass sie mit einem (Dosier-)Werkzeug verbindbar ist. Bei dieser Ausgestaltung kann die Pipettenspitze auf ein Werkzeug aufgesetzt werden, das keine Dosierfunktion oder nur eine unvollständige Dosierfunktion (z.B. nur die Aufnahme oder nur die Abgabe von Flüssigkeit zwischen den Messflächen) oder eine vollständige Dosierfunktion hat. Auch bei dieser Ausgestaltung kann die Pipettenspitze ein oberes Ende (z. B. mit Aufstecköffnung) wie eine herkömmliche Pipettenspitze aufweisen. Bei einem Werkzeug ohne Aufnahmefunktion kann die Aufnahme von Flüssigkeit durch hydrostatischen Druck (Eintauchen der Messflächen) und/oder Kapillarkraft erfolgen. Hierzu ist gemäß einer Ausgestaltung eine oder sind beide Messflächen hydrophil oder hydrophilisiert. Grundsätzlich kann die Aufnahme von Flüssigkeit durch Kapillarkraft auch ohne zusätzliches Werkzeug erfolgen, indem die Pipettenspitze direkt vom Anwender gegriffen wird. Hierzu kann der Körper der Pipettenspitze als Griff ausgestaltet sein.

Bei einem Werkzeug ohne die Abgabefunktion einer Pipette kann die Abgabe der Flüssigkeit nicht mit definiertem Volumen wie bei einer Pipette erfolgen, sondern beispielsweise durch Abgabe auf saugfähiges Material, das die Flüssigkeit weitgehend aus der Pipettenspitze entfernt, oder durch Ausstoßen der gesamten Flüssigkeit. Die Abgabe kann ggfs. auch ohne Werkzeug erfolgen. Hierfür kann der Körper der Pipettenspitze als Griff ausgestaltet sein.

Gemäß einer weiteren Ausgestaltung weist das weitere Ende der Pipettenspitze Mittel zum Greifen (z. B. einen Knauf, Knebel oder anderen Griff) auf. Bei dieser Ausgestaltung kann die Aufnahme von Flüssigkeit durch hydrostatischen Druck (Eintauchen der Messflächen) und/oder Kapillarkraft erfolgen. Die Abgabe kann auch auf saugfähiges Material erfolgen. Zusätzlich ist das weitere Ende dieser Pipettenspitze wie das obere Ende einer Pipettenspitze ausgebildet, sodass sie wie eine Pipettenspitze mittels einer Pipette befüllbar und entleerbar ist.

Der Adapter hat eine an einen Küvettenschacht angepasste Form, so dass eine zwischen den Messflächen des Einsatzes gehaltene Probe im Strahlengang angeordnet ist, wenn der Einsatz in den Adapter eingesetzt und der Adapter in den Küvettenschacht eingesetzt ist.

Eine bevorzugte Ausgestaltung weist Mittel zum Positionieren der beiden Messflächen in einem Standardküvettenschacht auf. Ein Standardküvettenschacht im Sinne dieser Anmeldung hat einen rechteckigen, insbesondere quadratischen Querschnitt. Gemäß einer Ausgestaltung hat er eine Grundfläche von 12,5 mm x 12,5 mm. Gemäß einer weiteren Ausgestaltung verläuft der Strahlengang in einem Abstand von 8,5 mm bis 20 mm über dem Boden des Küvettenschachtes. Gemäß einer weiteren Ausgestaltung verläuft der Strahlengang in einem Abstand von 8,5 mm oder 1 mm über dem Boden des Küvettenschachtes. Der Querschnitt des Adapters für die Aufnahme des Einsatzes ist an den Querschnitt des Standardküvettenschachtes angepasst. Gemäß einer Ausgestaltung sind die Messflächen so in der Küvette positioniert, dass ihr Zentrum den obigen Abstand des Strahlenganges vom Boden des Küvettenschachtes aufweist.

Gemäß einer Ausgestaltung hat die Küvetten Mittel zum Positionieren des Einsatzes in verschiedenen Positionen in einem Küvettenschacht. Gemäß weiterer Ausgestaltungen sind dies Mittel zum Positionieren in verschiedenen Höhenpositionen im Küvettenschacht. Diese Mittel können z.B. ausziehbare bzw. ausschraubbare Füße der Küvette sein. Sie dienen z.B. der Anpassung an die Höhe des Strahlenganges der Messvorrichtung.

Im Sinne der Erfindung ist eine Küvette eine Vorrichtung, die dazu bestimmt ist, Proben für optische Untersuchungen zu positionieren. Eine erfindungsgemäße Küvette muss also nicht in konventioneller Weise als Gefäß mit einer durch Boden- und Seitenwände umschlossenen Aufnahme für Flüssigkeit ausgestaltet sein, wobei eine solche Ausgestaltung jedoch auch nicht ausgeschlossen ist.

Bei den erfindungsgemäßen Küvetten wird ein geringes Volumen einer flüssigen Probe zwischen den beiden Messflächen positioniert. Durch die Oberflächenspannung der Flüssigkeit bildet sich eine Säule zwischen den beiden Messflächen aus, durch die eine optische Messung durchgeführt werden kann. Der Adapter dient dazu, die Messflächen in bevorzugt vertikaler Ausrichtung so in einem Küvettenschacht zu positionieren, dass ohne weitere Änderungen des Lichtweges in einem herkömmlichen Photometer oder Spektrometer gemessen werden kann. Hierzu ist der Adapter bevorzugt auf die Abmessungen eines Standardküvettenschachtes abgestimmt, so dass er wie eine Standardküvette eingesetzt werden kann. Der Adapter kann aber auch auf einen Küvettenschachtt mit anderen Abmessungen als ein Standardküvettenschacht abgestimmt sein.

Der Einsatz und/oder Adapter kann für Mehrfachgcbrauch oder als Consumable oder Disposable für Einmalgebrauch ausgeführt sein. Der Einsatz und/oder der Adapter kann aus einem oder mehreren Kunststoffen (z. B. Polypropylen, Polyethylen, Polystyrol, PVC) und/oder einem einzigen oder mehreren verschiedenen Materialien hergestellt sein. Der Adapter kann auch aus Metall (z. B. Aluminium oder Edelstahl) hergestellt sein, insbesondere wenn er für mehrlagige Verwendung bestimmt ist. Einsatz und Adapter können alternativ unlösbar miteinander verbunden sein bzw. aus einer einzigen Vorrichtung bestehen.

Die Messflächen können auch alternativ so ausgestattet sein, z. B. durch entsprechende Oberflächengestaltung, dass mehrere Proben auf ihr angeordnet sein können. Die Proben können verschieden sein oder als identische Proben auf die Messfläche aufgebracht werden.

Durch unterschiedlich große Abstände zwischen den beiden Messflächen können Messungen mit Volumina von unter einem Mikroliter bis zu mehreren Mikrolitern in einer Küvette realisiert werden. Gemäß einer Ausgestaltung sind die Abstände zwischen den Messflächen so bemessen, dass Proben mit Volumina von 0,5 bis 5 Mikrolitern zwischen den Messflächen gehalten werden können. Bevorzugt sind die Abstände zwischen den Messflächen so bemessen, dass dazwischen Proben von etwa 1 bis 3 Mikrolitern gehalten werden können. Die Küvette kann so auf ein bestimmtes Volumen ausgelegt sein, wobei die Messflächen nur in einem bestimmten Abstand voneinander im Strahlengang gehalten werden können.

Bei sämtlichen vorgenannten Erfindungsvarianten kann der Strahlengang der optischen Messvorrichtung quer durch die Messflächen hindurch verlaufen, wozu die Messflächen bzw., die Messflächen aufweisenden Einsätze durchsichtig oder klar ausgeführt sind. Gemäß einer anderen Ausgestaltung verläuft der Strahlengang der optischen Messvorrichtung parallel zu den Messflächen durch offene Seiten des Abstandsbereichs zwischen den Mcssflächen hindurch. Dann können die Messflächen auch lichtundurchlässig ausgeführt sein.

Grundsätzlich können Messflächen eine gekrümmte oder eine andere Form aufweisen. Gemäß einer bevorzugten Ausgestaltung sind die Messflächen plan. Bei Anordnung der Messflächen an der Seite eines Plättchens bzw. einer Wand sind bevorzugt beide Seiten des Plättchens bzw. der Wand planar.

Grundsätzlich können die planarcn Messflächen eine beliebige Ausrichtung zueinander haben. Beispielsweise können sie in einem Winkel zueinander ausgerichtet sein. Gemäß einer bevorzugten Ausgestaltung sind die Messflächen planparallel zueinander angeordnet. Die planparallele Anordnung planerer Messflächen dient insbesondere dem Durchtritt des Strahlengangs durch die Messflächen ohne störende Ablenkung des Lichtstrahles.

Grundsätzlich können die Messflächen verschiedene Ausrichtungen zueinander haben, beispielsweise derart, dass die Messfläche zueinander Winkel in allen drei Raumachsen annehmen. Gemäß einer bevorzugten Ausgestaltung haben die Messflächen eine einander überdeckende Anordnung. Bevorzugt sind die Messflächen an planparallelen Plättchen in einander überdeckender Anordnung vorhanden.

Gemäß einer Ausgestaltung beträgt der Abstand der Messflächen voneinander in Messposition 5 mm oder weniger. Bei dem genannten Abstand werden viele der zu untersuchenden flüssigen Proben aufgrund von Kapillarkräften zwischen den Messflächen gehalten. Bevorzugt beträgt der Abstand 0,1 bis 2 mm.

Die erfindungsgemäße Küvette ist bevorzugt so ausgestaltet, dass sie als Standardküvette in einen Standardküvettenschacht hineinpasst. Sie kann aber auch so ausgestaltet sein, dass sie in einen Küvettenschacht anderer herkömmlicher oder zukünftiger optischer Messvorrichtungen cinsctzbar ist.

### Kurze Beschreibung der Zeichnungen

In den Zeichnungen zeigen:
- Fig. 1: Pinzette mit planaren Messflächen an den freien Enden und geöffneten Armen in einer Perspektivansicht schräg von der Seite;
- Fig. 2: dieselbe Pinzette mit zusammengeschwenkten Armen in derselben Perspektivansicht;
- Fig. 3: einen Adapter mit einer Aufnahme für die Pinzette in einer Perspektivansicht schräg von oben und von der Seite;
- Fig. 4: denselben Adapter mit eingesetzter Pinzette in einem perspektivischen Röntgenbild;
- Fig. 5: eine Pipettenspitze mit planaren Messflächen am unteren Ende in einer Perspektivansicht schräg von unten und von der Seite;
- Fig. 6: einen Adapter mit einer Aufnahme und der darin eingesetzten Pipettenspitze in einer Perspektivansicht schräg von oben und von der Seite;
- Fig. 7: die Pipettenspitze eingesetzt in den Adapter in der Draufsicht;
- Fig. 8: die Pipettenspitze eingesetzt in den Adapter in einer Seitenansicht;
- Fig. 9: ein Slide mit einer planaren Messfläche in einer Perspektivansicht schräg von oben und von der Seite;
- Fig. 10: einen Adapter für die Aufnahme zweier Slides in geöffnetem Zustand in einer Perspektivansicht schräg von oben und von der Seite;
- Fig. 11: der Adapter bestückt mit zwei Slides in aufgeklapptem Zustand in einer Perspektivansicht schräg von unten und von der Seite;
- Fig. 12: der Adapter bestückt mit den Slides in zusammengeklapptem Zustand in einer Perspektivansicht auf zwei Seiten;
- Fig. 13: ein Adapter bestückt mit planaren Messflächen aufweisenden Einsatzteilen mit auseinandergeschwenkten Adaptcrteilen einer Perspektivansicht schräg von unten und von einer Seite;
- Fig. 14: derselbe Adapter mit zusammengeschwenkten Adapterteilen in derselben Perspektivansicht;
- Fig. 15: Einsatzteil mit planarer Messfläche mit flüssigkeitsbenetzenden und flüssigkeitsabweisenden Zonen in einer Ansicht schräg auf die planare Messfläche und auf die Seite;
- Fig. 16: das selbe Einsatzteil in einer Perspektivansicht auf die gegenüberliegende planare Augenseite;
- Fig. 17: planare Messfläche mit Vertiefung in einem Längsschnitt;
- Fig. 18: planare Messfläche mit mehreren Überlaufkammern in einer Draufsicht;
- Fig. 19: planare Messfläche mit einer Überlaufkammer in der Draufsicht;
- Fig. 20: planare Messfläche mit flüssigkeitsbenetzenden Zentralbereich und flüssigkeitsabweisenden Randflächen in einem Längsschnitt;
- Fig. 21: planare Messflächen mit einem aufgesetzten Tropfen vor Annäherung der Messflächen in einem Längsschnitt;
- Fig. 22: dieselben Messflächen nach Annäherung in einem Längsschnitt;
- Fig. 23: zwei planare Messflächen mit zwei aufgesetzten Tropfen vor Annäherung der Messflächen im Längsschnitt;
- Fig. 24: dieselben Messflächen nach Annäherung in einem Längsschnitt;
- Fig.25: Magnetverriegelung zweier Messflächen in Mcssposition in einem Längschnitt;
- Fig. 26: Küvcttc mit einem zu zwei Seiten hin offenen Kapillarkanal in einer Seitenansicht;
- Fig. 27: dieselbe Küvette in einer anderen Seitenansicht;
- Fig. 28: dieselbe Küvette in einer Perspektivansicht schräg von zwei Seiten.

### Detaillierte Beschreibung der Ausführungsbeispiele

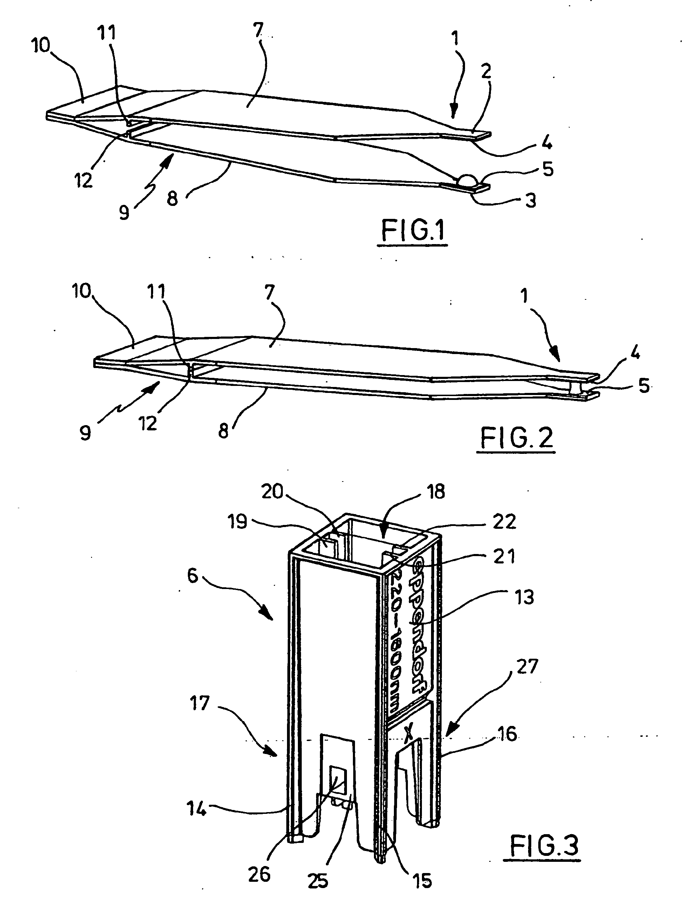

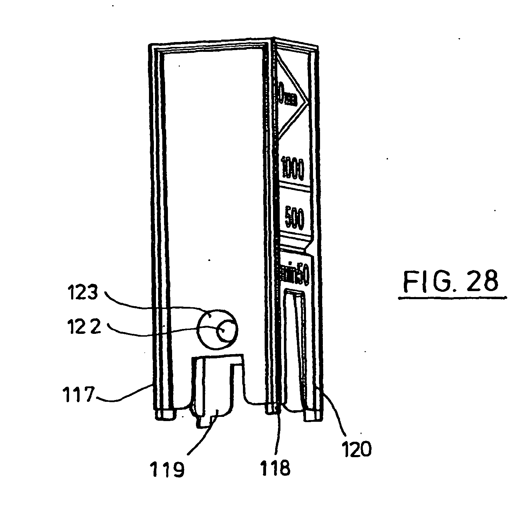

Die Küvetten gemäß Fig. 1 bis 4, 9 bis 14 und 25 bis 28 sind nicht Gegenstand dieser Anmeldung. Sie sind lediglich zur Veranschaulichung der beanspruchten Erfindung beschrieben.

Nachfolgend beziehen sich die Angaben "oben" und "unten" auf die Ausrichtung, die die betreffenden Vorrichtungsteile bei Anordnung in einem Küvettenschacht eines Photometers oder Spektrometers aufweisen.

Die in den Fig. 1 bis 4 gezeigte Küvette besteht aus mindestens zwei Teilen.

Eine Vorrichtung 1 bestehend aus zwei Plättchen 2, 3 mit planaren Messflächen 4, 5 an den Innenseiten und einem Adapter 6 zum Positionieren der Vorrichtung 1 in einem konventionellen Photometer, Spektrophotometer oder dgl.

Im Beispiel sind die Plättchen 2, 3 der Vorrichtung 1 an den freien Enden der Arme 7, 8 einer Pinzette 9 angeordnet. Die Arme 7, 8 sind im unteren Bereich zu den Plättchen 2, 3 hin angeschrägt. Die Arme 7, 8 sind an den oberen Enden bei 10 vorzugsweise fest miteinander verbunden. Die Arme 7, 8 sind elastisch zusammenschwenkbar. Die Zusammenschwenkbarkeit der beiden Arme 7, 8 wird begrenzt durch an den Innenseiten der Arme 7, 8 angeordnete Abstandshalter 11, 12 in Form zweier quer zu den Armen verlaufender Rippen vorzugsweise in der Nähe der Messflächen.

Der Adapter 6 selbst hat den quaderförmigen Umriss einer Standardküvette. Er ist im Oberbereich 13 ringsum geschlossen und weist unten vier Füße 14 bis 17 auf.

Der Adapter 6 hat innen einen Hohlraum 18, wobei innen an zwei einander gegenüberliegenden Seitenwänden jeweils zwei parallele Führungsschienen 19, 20, 21, 22 für die Pinzette 9 angeordnet sind. Die Pinzette 9 ist mit zusammengeschwenkten Armen gemäß Fig. 2 in die von den Führungsschienen 19 bis 22 gebildete Führung einsetzbar.

Die Führungsschienen 19 bis 22 sind unten durch nach innen geneigte Begrenzungswände 23, 24 begrenzt, deren Neigung der Neigung der Anschrägungen der Arme 7, 8 der Pinzette 9 entspricht. Die Begrenzungswände 23, 24 stehen innen von den Seitenwänden vor, welche die Führungsschienen 19 bis 22 tragen.

An die unteren Ränder der Begrenzungswände 23, 24 ist ein kastenförmiges Unterteil 25 eingesetzt. Dieses weist an einander gegenüberliegenden Stirnflächen Durchgangsöffnungen 26, 27 auf.

Die Konstruktion des Adapters 6 entspricht damit im Wesentlichen der Küvette gemäß deutschem Patent DE 198 26 470 C1, das durch Bezugnahme einbezogen ist. Die Abweichungen von der vorbekannten Konstruktion bestehen darin, dass die Innenseiten der Seitenwände mit den Führungsschienen 19 bis 22 versehen sind und das kastenförmige Unterteil 25 Durchgangsöffnungen 26, 27 aufweist.

Die Pinzette 9 kann als Disposable ausgeführt sein. Der Adapter 6 kann ebenfalls ein Disposable oder wiederverwendbar sein. Bevorzugt sind Pinzette 9 und Adapter 6 aus Kunststoff hergestellt.

Ein geringes Volumen der zu analysierenden Flüssigkeit wird zwischen den optisch transparenten Messflächen 4, 5 der Vorrichtung 1 positioniert. Der Adapter 6 dient dazu, die Vorrichtung 1 mit den planaren Mcssflächen 4, 5 anschließend in vertikaler Ausrichtung so in einem Küvettenschacht zu positionieren, dass ohne weitere Änderungen des Lichtwegs in einem konventionellen Photometer bzw. Spektrometer gemessen werden kann.

Die Pinzette 9 kann eine Einführungshilfe aufweisen, die eine einfache "Befüllung" der Messflächen 4, 5 ermöglicht. Im geöffneten Zustand stehen die Arme 7, 8 der Pinzette 9 so zueinander, dass eine ausreichend großer Freiraum zur Aufbringung der Probe, z.B. in Form eines Tropfens, auf eine der planaren Messflächcn 4, 5 gewährleistet ist. Durch Zusammendrücken der beiden Arme 7, 8 werden die planaren Messflächen 4, 5 am Ende der Arme 7, 8 auf einander zu bewegt, so dass der Tropfen beide Messflächen 4, 5 benetzt. Dabei können die planaren Messflächen 4,5 so geformt und/oder beschichtet sein, dass die Ausbreitungsrichtung des Mediums zur Messrichtung hin begünstigt wird und bei Überdosierung nur in eine Richtung, z.B. nach oben, entweichen kann. Durch die beiden Abstandshalter 11, 12, vorzugsweise nahe der planaren Mcssflächen 4, 5, werden die Arme 7, 8 so positioniert, dass eine definierte optische Schichtdicke zwischen den Messflächen 4, 5 entsteht. Mittels verschiedener Pinzetten 9 mit unterschiedlich großen Schichtdicken können Messungen mit Volumina von einem Mikroliter bis mehreren Mikrolitern in einem Adapter 6 realisiert werden.

Die Pinzette 9 kann zusätzlich eine Arretierfunktion enthalten, die es dem Anwender ermöglicht, die Pinzette 9 in geschlossenem Zustand, in dem die Abstandshalter 11, 12 aneinander anliegen, aus der Hand zu legen.

Ferner kann die Pinzette 9 zusätzlich Ausrichtvorrichtungen enthalten, die die Messflächen 4, 5 parallel ausrichten.

Die Pinzette 9 wird in geschlossenem Zustand in die Führungsschienen 19 bis 22 des Adapters 6 eingesetzt, bis die Anschrägungen der Arme 7, 8 an den geneigten Begrenzungswänden 23, 24 des Adapters anliegen. In dieser Position sind die Plättchen 2, 3 vertikal in dem Adapter 6 angeordnet und mit den Außenseiten auf die Durchtrittsöffnungen 26, 27 ausgerichtet. Die Pinzette 9 kann von den Führungsschienen 19 bis 22 im geschlossenen Zustand gehalten werden.

Bei Anordnung des Adapters 6 im Küvettenschacht eines Photometers oder Spektrometers sind die Durchtrittsöffnungen 26, 27 im Strahlengang der Messoptik angeordnet, so dass dieses zur optischen Messung der Probe zwischen den Messflächen 4, 5 genutzt werden kann.

Der Adapter 6 kann so ausgeführt sein, dass ein Austritt der flüssigen Probe bei Fehlbehandlung, z.B. bei Erschütterung, verhindert wird. Er kann außerdem einen Blcndcncharaktcr aufweisen, wodurch eine universelle Nutzung unabhängig vom Spektrometertyp möglich ist. Der Adapter 6 kann wie eine Küvette als Disposablc ausgeführt sein, jedoch ist ein Austausch nur im Falle einer Fehlhandhabung notwendig.

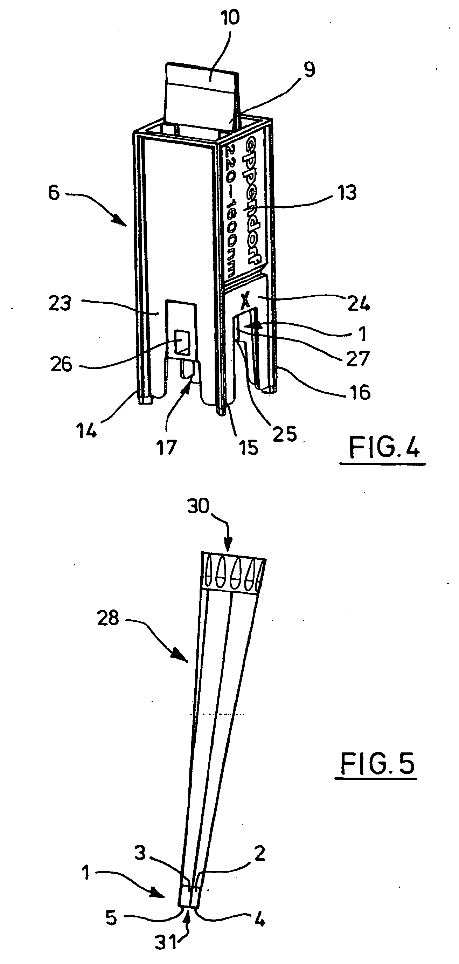

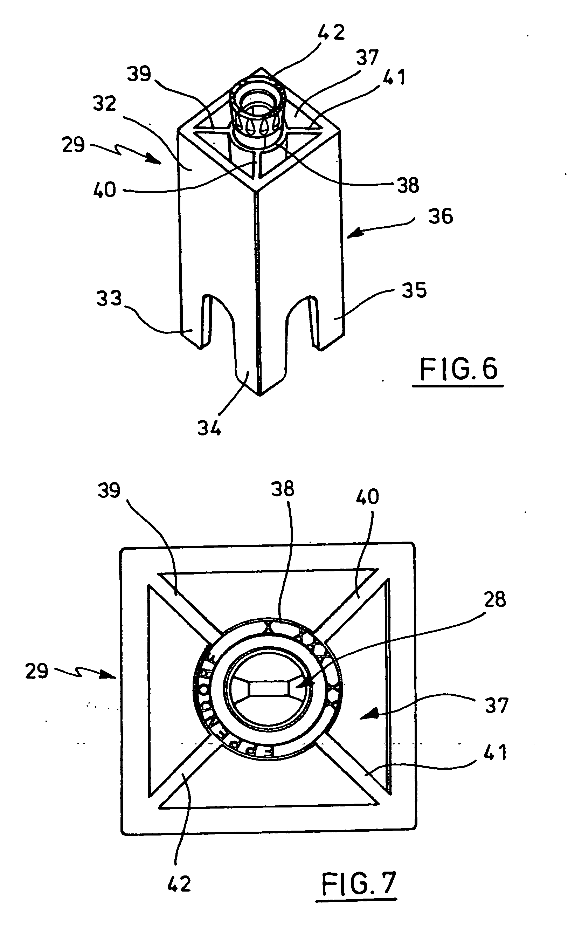

Die Küvette gemäß Fig. 5 bis 8 besteht aus mindestens zwei Teilen, nämlich einer Messspitze 28 und einem Adapter 29. Die Messspitze 28 hat ein oberes Ende mit einer oberen Öffnung 30, mit der sie auf einen Befestigungsansatz einer z.B. handelsüblichen Pipette aufklemmbar ist. Ferner hat sie ein unteres Ende mit einer unteren Öffnung 31. Die untere Öffnung 31 ist durch eine Vorrichtung 1 umfassend zwei optisch transparente Plättchen 2, 3 mit planaren und vorzugsweise planparallelen Messflächen 4, 5 an den Innenseiten begrenzt. Seitlich ist der Abstandsbereich zwischen den Plättchen 2, 3 geschlossen, so dass der Abstandsbereich nur unten bei 31 geöffnet ist.

Zwischen der oberen Öffnung 30 und der unteren Öffnung 31 ist in der Messspitze 28 ein durchgehender Kanal ausgebildet. Außen hat die Messspitze 28 eine sich von oben nach unten verjüngende Form.

Der Adapter 29 ist ebenfalls kastenförmig ausgebildet und an einen Standardküvettenschacht angepasst. Im Oberbereich 32 ist er am Umfang geschlossen und unten weist er vier Füße 33 bis 36 auf. Innen hat der Adapter 29 einen Hohlraum 37, in dem eine Aufnahme 38 angeordnet ist. Die Aufnahme 38 ist an die Außenkontur der Messspitze 28 angepasst. Die Aufnahme 38 ist über radial verlaufende Rippen 39, 40, 41, 42 innen an den Wänden des Adapters 29 abgestützt.

Die Messspitze 28 kann analog zu einer konventionellen Pipettenspitze auf einen Befestigungsansatz einer z.B. handelsüblichen Pipette aufgesteckt werden, mittels der das zum messende Medium zwischen die Plättchen 2, 3 eingesogen werden kann. Dabei benetzt das Medium die planaren Messflächen 4, 5. Durch verschiedene Messspitzen 28 mit unterschiedlich großen Abständen zwischen den Messflächen 4, 5 können unterschiedlich große Messreservoirs für Messungen mit Volumina von unter einem Mikroliter bis zu mehreren Mikrolitern (z.B. 0,5 bis 5 Mikroliter) bzw. unterschiedliche Schichtdicken in einer Küvette realisiert werden. Insbesondere bei Ausgestaltung für die Messung sehr geringer Volumina kann die zu messende Probe bereits durch Kapillarkräfte zwischen die Platten 2, 3 gezogen werden. Eine Aufnahme der Probe mit Hilfe einer z.B. handelsüblichen Pipette ist dann nicht nötig.

Die befüllte Messspitze 28 wird mittels einer Pipette in den Adapter 29 eingesetzt. Die Form der Aufnahme 38 ist so auf die Form der Messspitzc 28 abgestimmt, dass die eingesetzte Messspitze mit den Plättchen 2, 3 in den Freiräumen zwischen den Füßen 33 bis 36 angeordnet ist. Danach kann die Messspitze 28 von der Pipette abgeworfen werden. Sie kann aber auch bei der nachfolgenden Messung mit der Pipette verbunden bleiben. Die Küvette 29 kann dann mit der eingesetzten Messspitze 28 in einen Küvettenschacht eingesetzt werden, so dass der Lichtweg der optischen Messvorrichtung zwischen einander gegenüber liegenden Freiräumen zwischen jeweils einem Paar Füße 33, 34 und 35, 36 und quer durch die beiden Plättchen 2, 3 und die darin befindliche Probe hindurch verläuft. Die Probenaufnahme wird durch hydrophile Oberflächen begünstigt.

Der Adapter 29 kann so ausgeführt sein, dass ein Austritt der zu messenden Flüssigkeit bei Fehlhandhabung - z.B. bei starker Erschütterung - verhindert wird. Er kann weiterhin als Führung zur korrekten Ausrichtung der planaren Messflächen 4,5 zur Messrichtung des Photometers dienen. Ferner kann er einen Blendencharakter aufweisen, wodurch eine universelle Nutzung unabhängig vom Spektrometertyp möglich ist.

Mcssspitze 28 und Adapter 29 können jeweils als Consumable ausgeführt werden. Die Mcssspitze 28 kann nach jeder Messung ausgetauscht werden. Ein Austausch des Adapters 29 kann auf Fälle einer Fehlbehandlung beschränkt werden.

Die nachfolgenden beiden Ausführungsbeispiele umfassen zwei klappbare Adapterteile, die vorzugsweise unverlierbar über ein Gelenk miteinander verbunden sind. Zusammengeklappt bilden die Adapterteile einen Adapter mit den Abmessungen z.B. einer Standardküvette. Das Gelenk kann an der kurzen oder der langen Seite der Vorrichtung angebracht sein. Auseinandergeklappt wird die zu messende Probe entweder auf nur eine oder auf beide Messflächcn aufgebracht.

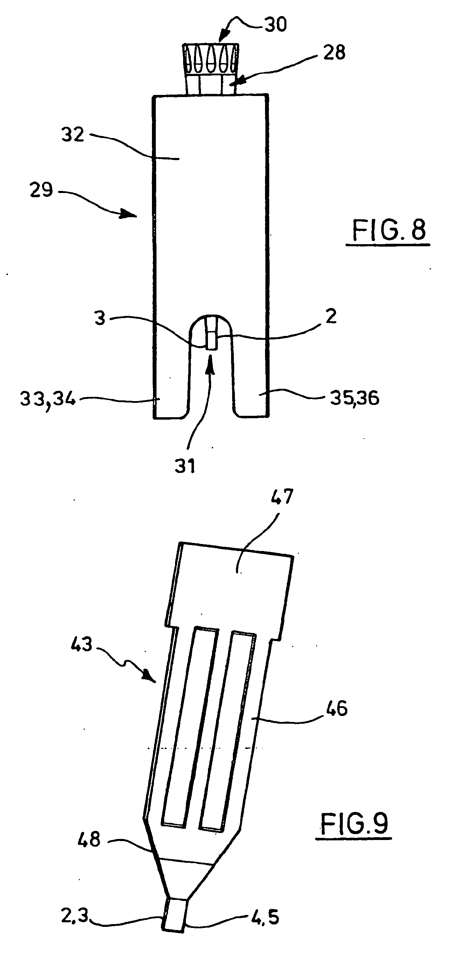

Die Küvette, gemäß Fig. 9 bis 12 umfasst zwei plattenförmige Probenträger ("Slides") 43, 44 und einen Adapter 45. Die Probenträger 43, 44 sind identisch. Sie haben am oberen Ende eines streifenförmigen Mittelteils 46 einen verbreiterten Griff und Wegbegrenzer 47. Unten ist der streifenförmige Mittelteil 46 bei 48 konisch verjüngt. Am unteren Ende haben die Slides 43, 44 jeweils ein Plättchen 2, 3 mit der planaren Messfläche 4 bzw. 5 vorzugsweise auf einer Seite.

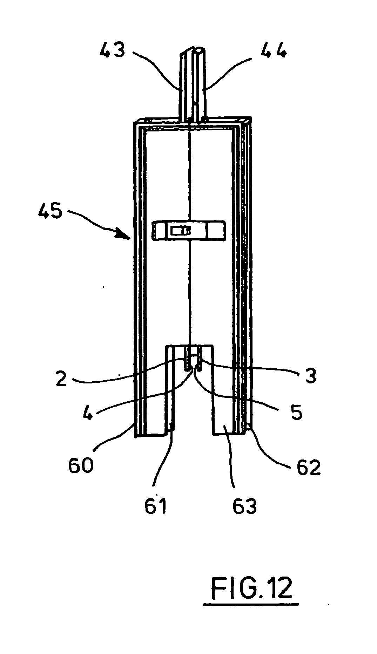

Der Adapter 45 umfasst zwei Adapterteile 49, 50, die über ein Filmscharnier 51 gelenkig miteinander verbunden sind. Zusammengeklappt bilden die Adapterteile 49, 50 gemäß Fig. 12 einen Adapter 45, dessen Form im Wesentlichen der des Adapters 6 gemäß Fig. 3 und 4 entspricht. Im Unterschied zu dem Adapter 6 weist jedoch der Adapter 45 in beiden Adapterteilen 49, 45 jeweils eine komplette Führung aus vier Führungsschienen 52 bis 55 sowie 56 bis 59 auf.

Der Adapter 45 und die Slides 43, 44 bestehen vorzugsweise aus Kunststoff.

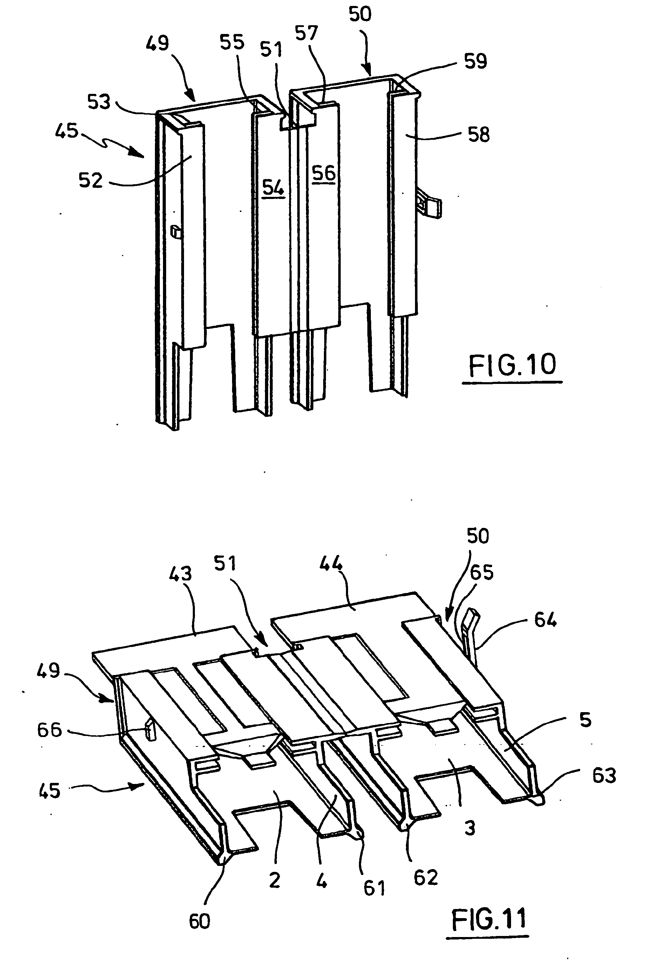

Gemäß Fig. 11 sind zwei Slides 43, 44 in die Führungen 52 bis 55 sowie 56 bis 59 eingesteckt, bis der Griff und Wegbegrenzer 47 am oberen Rand der beiden Adapterteile 49, 50 zur Anlage kommt. In dieser Lage sind die Plättchen 2, 3 in Ausnehmungen zwischen Füßen 60, 61 des Adapterteiles 49 und 62, 63 des Adapterteiles 50 angeordnet. Ferner kann eine Verrastung der Slides 43, 44 mit den Führungen 52 bis 55 sowie 56 bis 59 vorgesehen sein.
Dann wird auf die planare Messfläche 4 ein Tropfen der zu messenden Flüssigkeit aufgebracht. Danach werden die beiden Adapterteile 49, 50 zusammengeklappt, wobei die Flüssigkeit in Kontakt mit der Mcssfläche 5 kommt.

Die zusammengeklappten Adapterteile 49, 50 werden mittels eines Rasthakens 64 mit einer Rastausnehrnung 65 an dem Adapterteil 50 und einem Rastvorsprung 66 an dem Adapterteil 49 miteinander verriegelt. Dabei wird der Rasthaken 64 mit seiner Rastausnchmung 65 auf den Rastvorsprung 66 aufgeschoben. Durch Betätigen des Rasthakens 64 in Gegenrichtung kann die Verriegelung gelöst werden.

Gemäß Fig. 12 kann der geschlossene Adapter 45 in einen Standardküvettenschacht eingesetzt werden, wobei der Strahlengang der optischen Messvorrichtung durch die Aussparungen zwischen den Füßen 60, 61 und 62, 63 durch die beiden Plättchen 2, 3 hindurchtritt.

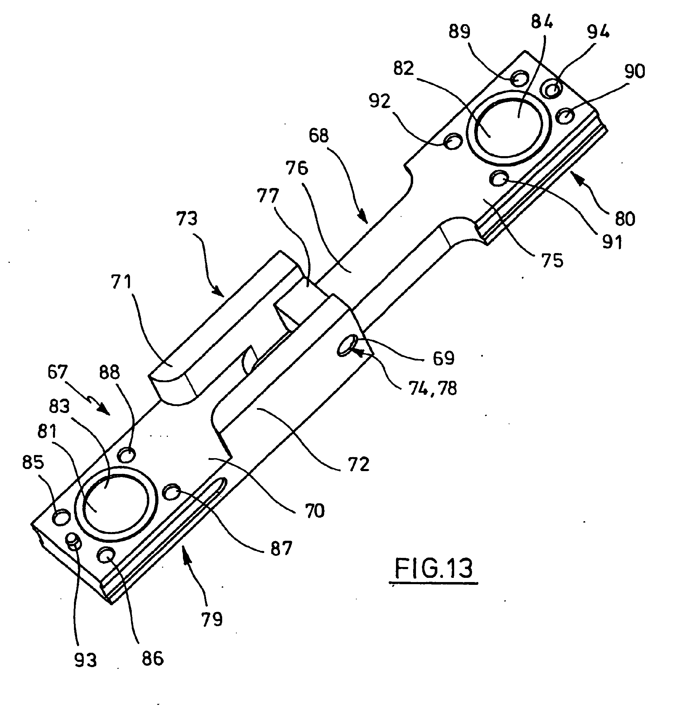

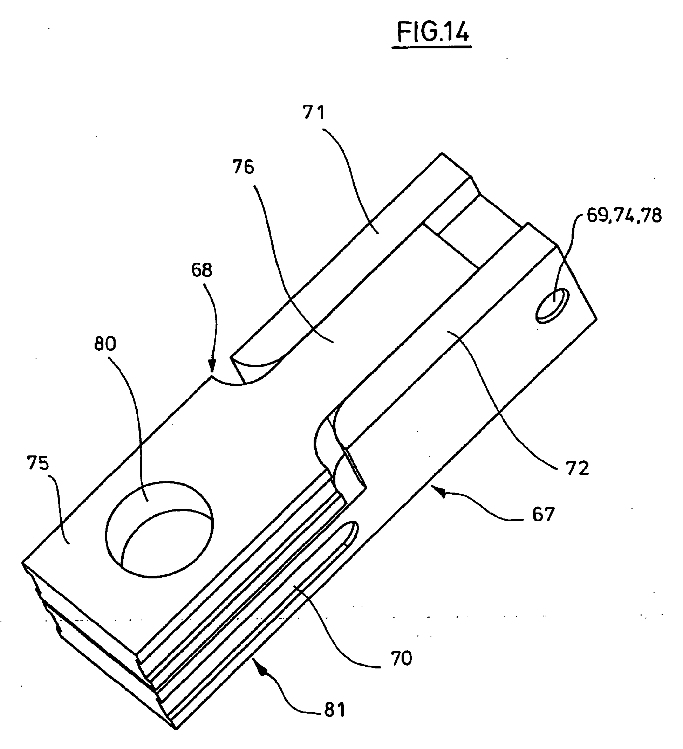

Bei der Küvette gemäß Fig. 9 bis 12 sind die Adapterteile 49, 50 entlang einer Längsseite aneinandergelenkt. Bei der Küvette gemäß Fig. 13 und 14 haben die Adapterteile 67, 68 eine gelenkige Verbindung 69 entlang einer Querachse.

Hierfür hat das Adapterteil 67 ein plattenförmiges Basisteil 70, der im Oberbereich auf einer Seite außen zwei Stege 71, 72 aufweist. In den Stegen 71, 72 sind Lageraugen 73, 74 des Drehgelenks 69 angeordnet.

Das Adapterteil 68 bestcht grundsätzlich aus einem plattenförmigen Trägerteil 75, der mit einem Ende eines Verbindungsarmes 76 verbunden ist, der anderenends einen Lagerblock 77 trägt. Der Lagerblock 77 ist zwischen den Schenkeln 71, 72 angeordnet, wobei durch eine zentrale Durchgangsbohrung des Lagerblocks 77 eine Achse oder Welle 78 hindurchgeführt ist, die beidenends in den Lageraugen 73, 74 gehalten ist.

Das Basisteil 70 und das Trägerteil 75 haben Durchtrittsöffnungen 79, 80, die im zusammengeklappten Zustand der Adapterteile 67, 68 miteinander fluchten. An den Innenseiten der Durchtrittsöffnungen 79, 80 sitzen plattenförmige Einsatzteile 81, 82 mit planaren Messflächen 83, 84 an den Innenseiten.

Vorzugsweise haben das Basisteil 70 und das Trägerteil 75 jeweils innen eingesetzte Magnete 85 bis 88 und 89 bis 92, die im zusammengeklappten Zustand jeweils paarweise aneinander anliegen. Ferner steht von dem Basisteil 70 ein Zentrierstift 93 vor, dem eine Zentrieraufnahme 94 des Trägerteils 75 zugeordnet ist.

Eine Probe kann in geöffnetem Zustand des Adapters auf eine oder beide planare Grenzflächen 81, 82 aufgebracht werden. Nach Zuklappen der Adapterteile 67, 68 ist der Adapter in einen Standardküvettenschacht einsetzbar. Der Lichtweg der optischen Messvorrichtung durchläuft die Durchtrittsöffnungen 79, 80, die dahinter angeordneten transparenten Plättchen 81, 82 und die dazwischen befindliche Probe.

Die Einsatzteile 81, 82 sind z.B. aus UV-durchlässigem Quarzglas oder aus UV-durchlässigem Kunststoff. Gegebenenfalls sind sie mit einer speziellen Oberflächenstruktur verschen.

Die Begrenzungen der Durchgangslöcher 80, 81 bilden Blenden, die bewirken, dass das Messlicht des Photometers oder Spektromcters nur die Probe durchstrahlt. Die Adapterteile 67, 68 bestehen vorzugsweise aus Kunststoff.

Die Adapterteile 67, 68 können aus einem anderen Material ausgeführt sein, beispielsweise aus Metall, insbesondere wenn sie zur Wiederverwendung bestimmt sind. Bei einer weiteren Variante können die Adapterteile 67, 68 aus dem gleichen Kunststoff bestehen wie die Einsatzteile 81, 82 und gegebenenfalls untrennbar als Spritzgussteil hergestellt werden.

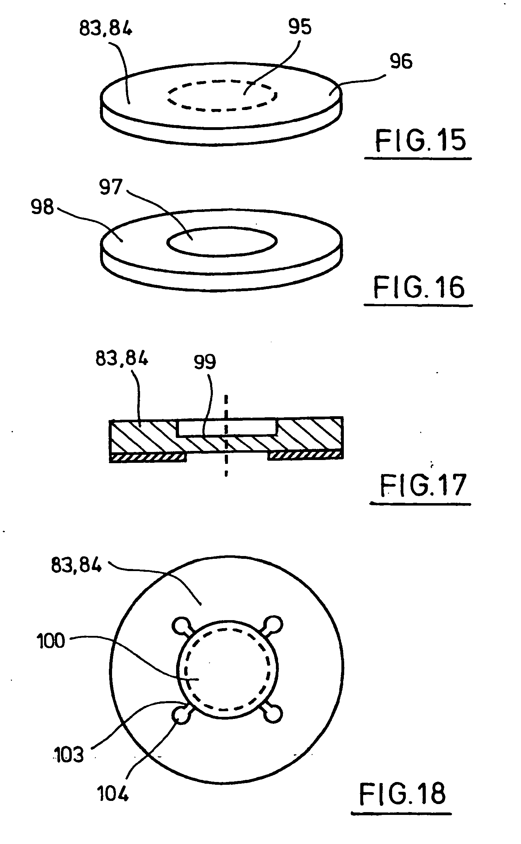

Gemäß Fig. 15 und 16 sind die optisch transparenten Messflächen 83, 84 im Zentrum mit einem zentralen flüssigkeitsbenetzenden Flächenteil 95 ausgeführt, um das herum ein flüssigkeitsabweisender Flächenteil 96 vorhanden ist. Die flüssigkeitsbenetzenden und flüssigkeitsabweisenden Eigenschaften der Bereiche 95, 96 können durch Beschichtungen hergestellt werden. Zwischen den beiden Flächen teilen 95, 96 ist keine mechanische Kante vorhanden, die beim Reinigen der Messflächen 83, 84 stört. Die Messflächen 83,84 werden vom Flächenteil 95 ausgehend zum Flächenteil 96 hin gereinigt, damit keine Restverunreinigungen im zentralen Flächenteil 95 verbleiben.

Dem flüssigkeitsbenetzenden Flächenteil 95 entspricht ein lichtdurchlässiger bzw. optisch transparenter Flächenteil 97 und dem flüssigkeitsabweisenden Flächenteil ein lichtundurchlässiger bzw. optisch nicht transparenter Flächenteil 98 an der Außenseite des Einsatzteiles 83, 84.

Die Flächenteile 95, 96 begrenzen die Ausbreitung der flüssigen Probe auf den Messflächen 83, 84. Am flüssigkeitsabweisenden bzw. hydrophoben Flächenteil hat der Flüssigkeitstropfen einen großen Kontaktwinkelpunkt. Infolgedessen steht er hoch über die Messflächen 83, 84 hinaus. Im flüssigkeitsbenetzenden bzw. hydrophilen Flächenteil 95 wird der Tropfen hingegen festgehalten bzw. verankert. Infolgedessen entstehen keine flachen, sondern etwa halbkugelförmige Flüssigkeitstropfen, so dass beim Zusammenklappen der Adapterteile 67, 68 ein auf eine Messfläche 83 oder 84 aufgebrachter Tropfen die andere Messfläche 84, 83 sicher benetzt oder auf beide Messflächen 83, 84 aufgebrachte Tropfen sich sicher vereinigen. Infolgedessen entsteht eine definierte Flüssigkeitssäule und damit eine definierte Messstrecke bzw. Schichtdicke.

Die Plättchen 2, 3 der übrigen Ausführungsbeispiele können an den Messflächen 4, 5 und den Außenseiten entsprechend ausgebildet sein.

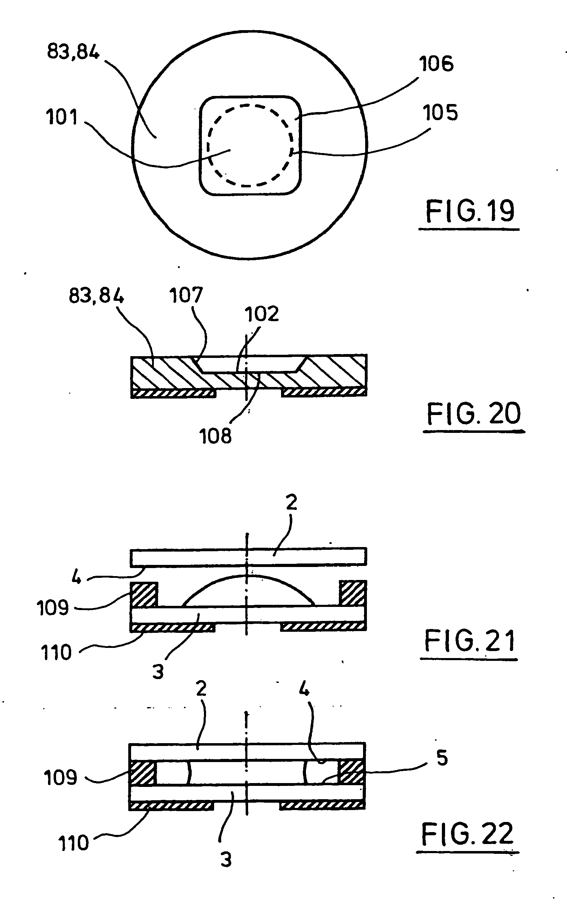

Bei den Ausführungsbeispielen gemäß Fig. 17 bis 20 sind in den Messflächen 83, 84 unterschiedlich ausgeformte Vertiefungen 99, 100, 101, 102 angeordnet. Die Vertiefungen 99 bis 102 nehmen Proben auf und begrenzen deren Ausbreitung auf den Messflächen 83, 84. Gemäß Fig. 18 und 19 kann überschüssige Probcnmenge über radiale Kanäle 103 in Vorratskammern 104 oder über eine Überlaufkante 105 in eine Überlaufkammer 106 entweichen. Bei dem Ausführungsbeispiel von Fig. 20 ist die Vertiefung 102 nach außen konisch erweitert. Zudem kann die die Erweiterung begrenzende Randfläche 107 flüssigkeitsabweisend sein und die Basisfläche 108 flüssigkeitsbenetzend, damit der Tropfen möglichst hoch von der Messfläche 83, 84 vorsteht.

Zur Begrenzung der Tropfenausbreitung kann auch ein planares Podest mit geringer Fläche auf der Messfläche 83, 84 angeordnet sein. Das planare Podest verhindert die Ausdehnung des Tropfens aufgrund seiner Oberflächenspannung. Dies bewirkt einen Anstieg der Tropfenhöhe und es kann eine Reduzierung der erforderlichen Probenmenge erzielt werden.

Die Ausbildung der Messflächen gemäß Fig. 17 bis 20 oder mit einem Podest kann bei sämtlichen Ausführungsbeispielen verwirklicht werden.

Gemäß Fig. 21 und 22 kann die Dicke der Schicht zwischen den beiden Messflächcn 4, 5 durch einen Abstandsring 109 definiert werden. Auf der Außenseite des Plättchens 3 ist eine Blende 110 als Beschichtung aufgebracht.

In diesem Beispiel wird nur auf die Messfläche 5 ein Tropfen aufgebracht, der die Messfläche 4 bei Anlage am Abstandsring 9 benetzt.

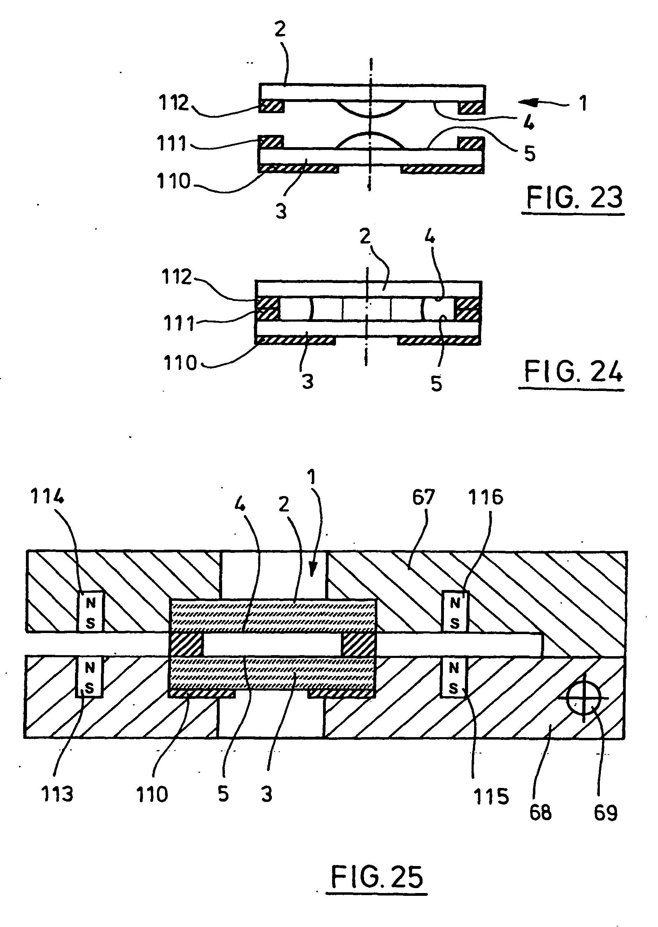

Bei dem Ausführungsbeispiel gemäß Fig. 23 und 24 sind beiden Messflächen 4, 5 Abstandsringe 111, 112 zugeordnet, die bei geschlossener Vorrichtung miteinander in Kontakt kommen. In diesem Beispiel ist die Schichtdicke durch beide Abstandsringe 111, 112 definiert. Gezeigt ist ferner die Aufbringung von Tropfen auf beiden Messflächen 4, 5, die bei geschlossener Vorrichtung 1 zusammenfließen.

Das Ausführungsbeispiel von Fig. 25 unterscheidet sich von dem gemäß Fig. 21 und 22 dadurch, dass die definierte Schichtdicke vorzugsweise durch Magnetkräfte von Magneten 113, 114, 115, 116 garantiert wird, deren ungleichnamige Pole bei geschlossener Vorrichtung 1 in kurzem Abstand voneinander angeordnet sind. Die Magnete 113 bis 116 sind in Vorrichtungsteile (z.B. Adapterteile 67, 68) der Küvette integriert, welche die Einsätze 2, 3 aufnehmen.

Damit die Planparallelität der Messflächen 4, 5 gewährleistet ist, kann ein zwischen den Vorrichtungsteilen 67, 68 ausgebildetes Gelenk 69 schwimmend ausgeführt sein, so dass das System nicht geometrisch überbestimmt ist. Im geschlossenen Zustand ist das Messgut in der zwei Adapterteile 67, 68 aufweisenden Klappküvctte definiert, sicher und stabil positioniert.

Eine weitere Ausführung der Erfindung stellt eine nicht im Einzelnen dargestellte Magazinierung der Einmalteile dar. Aus einem leicht handhabbaren Magazin vorzugsweise in Kartuschenform können die Einsätze 2,3 für Einmalgebrauch leicht in dafür vorgesehene Öffnungen einer wieder verwendbaren Klappküvette eingesteckt werden. Nach Gebrauch werden die Einmaleinsätze 2, 3 von Hand oder mittels einer Vorrichtung oder mittels eines Ansatzes an der Kartusche aus dem klappbaren Adapter herausgedrückt und weggeworfen. Neue Einsätze 2, 3 können dann wieder eingesetzt werden.

Die Einmalteile können auch mit als Einmalteil ausgeführten zweiteiligen Adaptern kombiniert werden. Ferner ist ein kombiniertes Einmalteil mit vorderem und hinterem Teil aus einem Werkzeug, ggfs. auch als sogenanntes Zweikomponenten-Spritzgußteil, möglich.

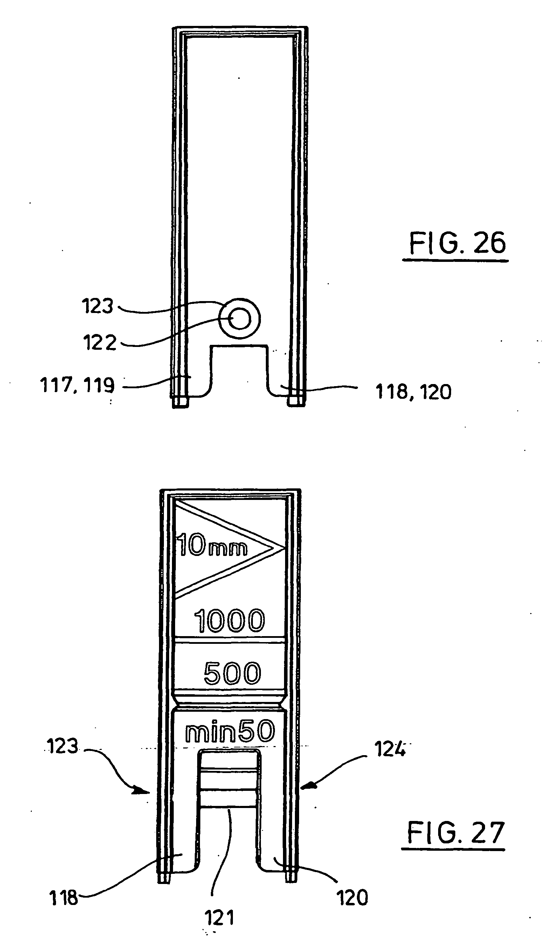

Die Küvette gemäß Fig. 26 bis 28 entspricht weitgehend der Küvette gemäß Ausführungsbeispiel der DE 198 26 470 C1, die durch Bezugnahme einbezogen ist. In Abweichung von der vorbekannten Küvette ist jedoch das zwischen den vier Füßen 117, 118, 119, 120 angeordnete kastenförmige Unterteil 121 nicht innen zu einem Hohlraum der Küvette hin geöffnet, sondern geschlossen. Ferner verläuft durch dieses Unterteil 121 ein zu beiden Seiten hin offener Kanal 122, der zu beiden Außenseiten hin trichterförmige Erweiterungen 123, 124 aufweist.

Die Küvette besitzt die Form einer handelsüblichen Küvette, sodaß sie in ein handelsübliches Photometer bzw. Spektrometer einsetzbar ist.

Durch den auf beiden Seiten offenen Kanal 122 hindurch können optische Messungen vorgenommen werden. Dadurch wird während einer Messung kein Licht durch eine Kunststoffwand der Küvette geleitet und somit die Messung nicht beeinflusst. Eine Leerwertmessung für jede Küvette ist nicht erforderlich.

Der Kanal 122 ist zu den Außenseiten der Küvette hin konisch aufgeweitet, so dass seine Überdosierung eine unwesentliche Erhöhung der optischen Schichtdicke bewirkt. Als Nebeneffekt erhält die Küvette so eine Einführungshilfe. Eine Pipettenspitze kann auf die Erweiterungen 123, 124 angesetzt und der Kanal 122 so gefüllt werden, bis die Flüssigkeit aus der Grenze zwischen konischem und zylindrischem Bereich des Kanals 122 heraustritt. Die Flüssigkeit füllt nun den Kanal 122 vollständig aus und wird durch die Adhäsion bzw. Kapillarwirkung darin gehalten.

Die konischen Erweiterungen 123 können aufgerauht sein, um zum einen eine Blendenwirkung zu erzielen und zum anderen bei unsachgemäßer Handhabung ein Austreten der Flüssigkeit zu vermeiden. Zusätzlich dazu kann dann unterhalb des Kanals 122 eine Wanne vorgesehen sein, die die austretende Flüssigkeit aufnehmen kann. Da der Kanal 122 deutlich kürzer als die Gesamtbreite der Küvette ist, kann die Flüssigkeit nur in diese Wanne fallen.

Die Ausführungsbeispiele dienen der Veranschaulichung der Erfindung. Die Erfindung ist nicht auf die Ausführungsbeispiele eingeschränkt.

## Patentansprüche

1. Küvette umfassend mindestens einen Einsatz (28) mit zwei Messflächen (4, 5), wobei der Einsatz eine Pipettenspitze (28) ist, die die beiden Messflächen (4, 5) an einem Ende aufweist, das von einem weiteren Ende (30) der Pipetten spitze (28) entfernt ist, das zum Verbinden mit einer Pipette ausgebildet ist, und einen Adapter (29) zum Einsetzen in einen Küvettenschacht einer optischen Messvorrichtung und Mittel von Einsatz und Adapter (29) zum lösbaren Halten des mindestens einen Einsatzes im Adapter (29) mit den Messflächen (4, 5) in einem Abstand voneinander zum Positionieren einer Probe zwischen den Messflächen (4, 5) in einem den Küvettenschacht durchquerenden Strahlengang der optischen Messvorrichtung.

2. Küvette nach Anspruch 1 mit Mitteln zum Positionieren der Messflächen (4, 5) in einem Standardküvettenschacht.

3. Küvette nach Anspruch 1 oder 2 mit Mitteln zum Positionieren der Messflächen (4, 5) in verschiedenen Positionen in einem Küvettenschacht.

4. Küvcttc nach Anspruch 3 mit Mitteln zum Positionieren der Messflächen (4, 5) in verschiedenen Höhenpositionen in einem Küvettenschacht.

5. Küvette nach einem der Ansprüche 1 bis 4, bei der die Mittel zum lösbaren Halten eine Aufnahme (38) des Adapters (29) und eine Kontur der Mcssspitze (28) umfassen, deren Geometrien so aufeinander abgestimmt sind, dass die Messspitze (28) in eine bestimmte Stellung in die Aufnahme (38) einsetzbar ist.

6. Küvette nach einem der Ansprüche 1 bis 5, bei der die beiden Messflächen (4, 5) optisch transparent sind.

7. Küvette nach einem der Ansprüche 1 bis 6, bei der die beiden Messflächen (4, 5) plättchenförmig sind.

8. Küvette nach einem der Ansprüche 1 bis 7, bei der der Einsatz (28) und/oder der Adapter (29) aus Kunststoff und/oder Metall besteht.

9. Küvette nach einem der Ansprüche 1 bis 8, bei der mindestens eine Messfläche (4, 5) hydrophil ist.

10. Küvette nach einem der Ansprüche 1 bis 9, bei der die Messflächen (4, 5) planar sind.

11. Küvette nach einem der Ansprüche 1 bis 10, bei der die Messflächen (4, 5) in Messposition parallel angeordnet sind.

12. Küvette nach einem der Ansprüche 1 bis 11, bei der der Abstand der Messflächen (4, 5) voneinander maximal 2mm vorzugsweise etwa 1 mm beträgt.

13. Küvette nach einem der Ansprüche 1 bis 12, bei der der Abstand der Messflächen (4, 5) voneinander so bemessen ist, dass dazwischen Proben mit einem Volumen von etwa 0,5 bis 5 Mikrolitern gehalten werden können.

14. Küvette nach einem der Ansprüche 1 bis 13, die mindestens eine Blende zur Begrenzung eines Lichtstrahles durch die Messflächen (4, 5) aufweist.

15. Küvette nach Anspruch 14, bei der der Adapter (29) die Blende aufweist.

## Claims

1. A cuvette comprising at least one insert (28) with two measuring surfaces (4, 5), wherein the insert is a pipet tip (28), which has the two measuring surfaces (4, 5) on one end, which is distanced from another end of the pipet tip (28), which is designed for connection with a pipette and an adapter (29) for insertion in a cuvette shaft of an optical measuring device and insert and adapter means (29) for releasably holding the at least one insert in the adapter (29) with the measuring surfaces (4, 5) at a distance from each other for the positioning of a sample between the measuring surfaces (4, 5) in a beam path of the optical measuring device passing through the cuvette shaft.

2. The cuvette according to claim 1 with means for the positioning of the measuring surfaces (4, 5) in a standard cuvette shaft.

3. The cuvette according to claim 1 or 2 with means for the positioning of the measuring surfaces (4, 5) in different positions in a cuvette shaft.

4. The cuvette according to claim 3 with means for the positioning of the measuring surfaces (4, 5) in different height positions in a cuvette shaft.

5. The cuvette according to one of claims 1 through 4, in which the means for the releasable holding comprises a receiver (38) of the adapter (29) and a contour of the pipet tip (28), the geometries of which are set for each other such that the pipet tip (28) can be inserted into the receiver (38) in a certain position.

6. The cuvette according to one of claims 1 through 5, in which the two measuring surfaces (4, 5) are optically transparent.

7. The cuvette according to one of claims 1 through 6, in which the two measuring surfaces (4, 5) are plate-like.

8. The cuvette according to one of claims 1 through 7, in which the insert (28) and/or the adapter (29) are made of plastic and/or metal.

9. The cuvette according to one of claims 1 through 8, in which at least one measuring surface (4, 5) is hydrophilic.

10. The cuvette according to one of claims 1 through 9, in which the two measuring surfaces (4, 5) are planar.

11. The cuvette according to one of claims 1 through 10, in which the measuring surfaces (4, 5) in the measurement position are arranged parallel.

12. The cuvette according to one of claim 1 through 11, in which the separation distance of the measuring surfaces (4, 5) from each other is maximum 2 mm preferably approximately 1 mm.

13. The cuvette according to one of claims 1 through 12, in which the separation distance of the measuring surfaces (4, 5) from each other is measured such that samples with a volume of approximately 0.5 to 5 microliters can be held in between.

14. The cuvette according to one of claims 1 through 13, which has at least one aperture for restricting a light bean through the measuring surfaces (4, 5).

15. The cuvette according to claim 14, in which the adapter (29) has the aperture.

## Revendications

1. Cuvette comprenant au moins un insert (28) muni de deux surfaces de mesure (4, 5), l'insert étant un embout de pipette (28) comportant les deux surfaces de mesure (4, 5) à une extrémité, éloignée d'une autre extrémité (30) de l'embout de pipette (28), qui est configurée pour être raccordé à une pipette, et un adaptateur (29) pour la mise en place dans un puits de cuvette d'un dispositif de mesure optique et des moyens d'insert et d'adaptateur (29) pour la fixation amovible dudit au moins un insert dans l'adaptateur (29) avec les surfaces de mesure (4, 5) écartées l'une de l'autre pour permettre le positionnement d'un échantillon entre les surfaces de mesure (4, 5) dans une trajectoire de faisceau traversant le puits de cuvette du dispositif de mesure.

2. Cuvette selon la revendication 1 comprenant des moyens de positionnement des surfaces de mesure (4, 5) dans un puits de cuvette standard.

3. Cuvette selon les revendications 1 ou 2 comprenant des moyens de positionnement des surfaces de mesure (4, 5) dans différentes positions dans un puits de cuvette.

4. Cuvette selon la revendication 3 comprenant des moyens de positionnement des surfaces de mesure (4, 5) dans différentes positions en hauteur dans un puits de cuvette.

5. Cuvette selon une des revendications 1 à 4, dans laquelle les moyens de fixation amovible comprennent un logement (38) de l'adaptateur (29) et un contour de l'embout de mesure (28) dont les géométries sont ajustées les unes aux autres de manière à ce que l'embout de mesure (28) puisse être inséré dans une position définie dans le logement (38).

6. Cuvette selon une des revendications 1 à 5, dans laquelle les deux surfaces de mesure (4, 5) sont optiquement transparentes.

7. Cuvette selon une des revendications 1 à 6, dans laquelle les deux surfaces de mesure (4, 5) sont en forme de plaquettes.

8. Cuvette selon une des revendications 1 à 7, dans laquelle l'insert (28) et/ou l'adaptateur (29) sont en plastique et/ou en métal.

9. Cuvette selon une des revendications 1 à 8, dans laquelle au moins une surface de mesure (4, 5) est hydrophile.

10. Cuvette selon une des revendications 1 à 9, dans laquelle les surfaces de mesure (4, 5) sont planaires.

11. Cuvette selon une des revendications 1 à 10, dans laquelle les surfaces de mesure (4, 5) sont agencées parallèlement dans une position de mesure.

12. Cuvette selon une des revendications 1 à 11, dans laquelle la distance entre les surfaces de mesure (4, 5) s'élève au maximum à 2 mm, de préférence environ 1 mm.

13. Cuvette selon une des revendications 1 à 12, dans laquelle la distance entre les surfaces de mesure (4, 5) est dimensionnée de telle sorte que des échantillons d'un volume d'environ 0,5 à 5 microlitres peuvent être maintenus entre elles.

14. Cuvette selon une des revendications 1 à 13, qui comprend au moins un diaphragme pour limiter un faisceau lumineux à travers les surfaces de mesure (4, 5).

15. Cuvette selon la revendication 14, dans laquelle l'adaptateur (29) comporte le diaphragme.
